(19) Europäisches Patentamt
European Patent Office
Office européen des brevets

(11) Veröffentlichungsnummer : **0 106 114**
**B1**

(12) # EUROPÄISCHE PATENTSCHRIFT

(45) Veröffentlichungstag der Patentschrift : **12.11.86**

(51) Int. Cl.⁴ : **C 07 F 9/53**, C 07 F 9/30, A 01 N 57/18

(21) Anmeldenummer : **83108805.9**

(22) Anmeldetag : **07.09.83**

(54) **Phosphorhaltige funktionelle Essigsäurederivate, Verfahren zu ihrer Herstellung und sie enthaltende herbizide und wachstumsregulierende Mittel.**

(30) Priorität : **10.09.82 DE 3233603**
**21.10.82 DE 3238958**

(43) Veröffentlichungstag der Anmeldung : **25.04.84 Patentblatt 84/17**

(45) Bekanntmachung des Hinweises auf die Patenterteilung : **12.11.86 Patentblatt 86/46**

(84) Benannte Vertragsstaaten :
**AT BE CH DE FR GB IT LI NL SE**

(56) Entgegenhaltungen :
**EP-A- 0 001 331**
**DE-A- 2 111 672**
**DE-A- 2 717 440**
**CHEMICAL ABSTRACTS, Band 71, Nr. 13, 29. September 1969, Seite 474, Nr. 61477y, Columbus, Ohio, USA A.N. PUDOVIK et al.: "Reactions of dialkylphosphinous acids with esters of alpha-oxocarboxylic and alpha-oxophosphonic acids"**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Bauer, Klaus, Dr.**
**Kolpingstrasse 7**
**D-6054 Rodgau (DE)**
Erfinder : **Bieringer, Hermann, Dr.**
**Eichenweg 26**
**D-6239 Eppstein/Taunus (DE)**
Erfinder : **Bürstell, Helmut, Dr.**
**Am Hohlacker 65**
**D-6000 Frankfurt am Main 50 (DE)**
Erfinder : **Kocur, Jean, Dr.**
**Am Heiligenstock 1**
**D-6238 Hofheim am Taunus (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 106 114 B1

**Beschreibung**

In der japanischen Anmeldung 54.089027 wird das Phosphonoglycin der Formel $(HO)_2P(O)CH(NH_2)COOH$ als Verbindung mit herbiziden Eigenschaften beschrieben. Bekannt sind ferner die n-Butyl- und n-Octylphosphinoylderivate des 2-Hydroxyessigsäure-butylesters, jedoch ohne Angabe einer physiologischen Wirkung (C.A. *71*, 61477 y (1969)).

Es wurde nun gefunden, daß die niederen Dialkylphosphinoyl-2-hydroxyessigsäuren und ihre funktionellen Derivate eine ausgezeichnete herbizide und wachstumsregulierende Wirkung besitzen.

Gegenstand der Erfindung sind Verbindungen der allgemeinen Formel

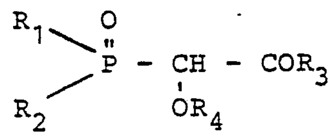

(I)

worin

$R_1$ und $R_2$ unabhängig voneinander Methyl oder Ethyl,

$R_3$ —OH, —SH ; $(C_1$-$C_{12})$-Alkoxy, $(C_3$-$C_8)$-Cycloalkoxy, $(C_3$-$C_6)$-Alkenyloxy, $(C_3$-$C_6)$-Alkinyloxy, Phenoxy oder Benzyloxy, wobei die genannten Gruppen ihrerseits durch OH, Halogen, $CF_3$, $(C_1$-$C_4)$-Alkyl oder $(C_1$-$C_4)$-Alkoxy substituiert sein können ; $(C_1$-$C_6)$-Alkylthio, $(C_3$-$C_8)$-Cycloalkylthio, $(C_3$-$C_6)$ Alkenylthio, $(C_3$-$C_6)$-Alkinylthio, Phenylthio oder Benzylthio, wobei die genannten Gruppen ihrerseits durch Halogen, $CF_3$, $(C_1$-$C_4)$-Alkyl oder $(C_1$-$C_4)$-Alkoxy substituiert sein können ; Amino, Hydroxylamino, $(C_1$-$C_4)$-Alkylamino, O-$(C_1$-$C_4)$-Alkylhydroxylamino, Di-$(C_1$-$C_4)$-alkylamino, Anilino, $(C_7$-$C_{10})$-phenylalkylamino, Di-$(C_7$-$C_{10})$-Phenylalkylamino, N-Phenyl-N-$(C_1$-$C_4)$-alkylamino, N-Phenyl-N-$(C_3$-$C_6)$-alkenylamino- oder N-Phenyl-N-$(C_3$-$C_6)$-alkinylamino, wobei die genannten Gruppen ihrereits durch OH, Halogen, $(C_1$-$C_4)$-Alkyl oder $(C_1$-$C_4)$-Alkoxy substituiert sein können ; Hydrazino, β-$(C_1$-$C_4)$-Alkylhydrazino, β,β-Di-$(C_1$-$C_4)$-alkylhydrazino, Piperidino, Pyrrolidino, Morpholino, 2,6-Dimethylmorpholino oder einen Rest der Formel

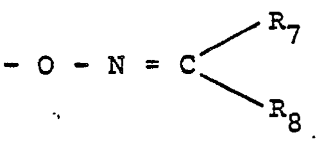

$R_4$ Wasserstoff, $(C_1$-$C_6)$-Alkyl, Allyl, Propargyl, Benzyl, Halogenbenzyl oder $—CONR_5R_6$

$R_5$ und $R_6$ unabhängig voneinander Wasserstoff, $(C_1$-$C_{12})$-Alkyl, $(C_3$-$C_8)$-Cycloalkyl, $(C_3$-$C_6)$-Alkenyl, $(C_3$-$C_6)$-Alkinyl, Phenyl, Benzyl, Benzoyl, Phenoxysulfonyl, $(C_1$-$C_{12})$-Alkylsulfonyl, $(C_3$-$C_6)$-Alkenylsulfonyl oder Phenylsulfonyl, wobei die genannten Gruppen ihrerseits durch Halogen, $CF_3$, CN, $(C_1$-$C_4)$-Alkoxy oder $(C_1$-$C_4)$-Alkoxycarbonyl substituiert sein können,

$R^7$ und $R_8$ unabhängig voneinander $(C_1$-$C_{12})$-Alkyl ; oder zusammen einen Alkylenrest mit 3-8 C-Atomen bedeuten,

sowie deren Salze.

Im vorstehenden bedeutet « Halogen » vorzugsweise Chlor oder Brom. Die für $R_3$ genannten aliphatischen Gruppen sind, sofern sie substituiert sind, vorzugsweise einmal durch Hydroxy, $(C_1$-$C_4)$-Alkoxy oder Halogen, insbesondere Chlor substituiert. Die aromatischen Gruppen können ein- bis dreimal substituiert sein, vorzugsweise durch Halogen, insbesondere durch Chlor, $CF_3$ $(C_1$-$C_2)$-Alkyl oder $(C_1$-$C_2)$-Alkoxy.

Falls $R_3$ —OH oder falls $R_3$ —SH bedeutet, sind die Verbindungen der Formel I auch zur Salzbildung mit anorganischen und organischen Basen befähight. Als Basenkationen kommen z. B. $Na^+$, $K^+$, $NH_4^+$, $Ca^{2+}$, $Mg^{2+}$, $Zn^{2+}$, $Cu^{2+}$, $Fe^{2+}$, $Ni^{2+}$, $(C_1$-$C_4)$-Alkyl-$NH_3^+$, Di-$(C_1$-$C_4)$alkyl-$NH_2^+$, Tri-$(C_1$-$C_4)$alkyl-$NH^+$ oder $(HOCH_2CH_2)_3NH^+$ in Betracht.

Beispielsweise kommen für $R_3$ und $R_4$ folgende Reste in Frage :

$R_3$ : OH, $ONH_4$, ONa, OK, $OCH_3$, $OC_2H_5$, $OCH_2CH_2Cl$, $OCH_2CH_2OH$, $OC_4H_9$(n), $OCH_2CHClCH_2Cl$, $OCH_2CH_2CH_2CH_2OH$, $OCH_2CF_3$, $OCH_2CH_2OCH_3$, $OCH_2CH = CH_2$, $OCH_2C = CH$, $OC_6H_5$, $OC_6H_4Cl$(p), $OC_6H_4CH_3$(p), $OC_6H_3Cl_2$(o, p), $OCH_2C_6H_5$, $OCH_2C_6H_5CH_3$(p), Cyclohexyloxy, Cyclopentyloxy ; SH, $SC_2H_5$, $SCH_2CH = CH_2$, $SC_6H_5$ ; $NH_2$, $NHCH_3$, $NHC_4H_9$(n), $NHCH_2CH_2OH$, $N(CH_3)_2$, $N(C_2H_5)_2$, NHOH, $NHOCH_3$, $NHOC_4H_9$(n), $N(i$-$C_3H_7)_2$, $NHC_6H_5$, NH-$C_6H_4Cl$(p), NH-$C_6H_4CH_3$(p), $NHCH_2C_6H_5$, $NHCH_2CH_2C_6H_5$, $N(CH_3)C_6H_5$, $N(CH_3)C_6H_5Br$, NH-$C_6H_5OCH_3$(p), $NHNH_2$, $NHNHCH_3$, $NHN(C_2H_5)_2$ ; $ON = C(CH_3)_2$

$R_4$ : $C_2H_5$, $C_3H_7$(i), $CH_2CH = CH_2$, $CH_2C \equiv CH$, $CH_2$-$C_6H_4Cl$(p), $CH_2C_6H_3Cl_2$(o, p), $CH_2C_6H_4Br$(p), $CONH_2$, $CONHCH_3$, $CON(CH_3)_2$, $CONHSO_2CH_3$, $CONHSO_2CH_2C = CHCH_3$, $CON(CH_2CH = CH_2)_2$, $CONHC_6H_5$.

Die Herstellungsverfahren sind dadurch gekennzeichnet, daß man

a) zur Herstellung von Verbindungen mit $R_4$ = Wasserstoff Verbindungen der Formel

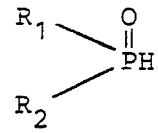

(II)

mit Verbindungen der Formel

$$BO = CH — COR_3 \qquad (III)$$

umsetzt und

b) zur Herstellung von Verbindungen mit $R_4 \neq$ Wasserstoff die gemäß a) erhaltenen Verbindungen der Formel

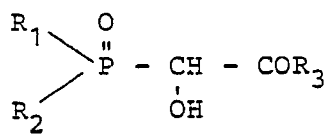

(IV)

durch Alkylierung, Benzylierung oder Acylierung in andere Verbindungen der Formel I überführt, und ggf. Säuren in ihre Salze umwandelt.

zu a) : Die Ausgangsstoffe der Formel II sind bekannt (vgl. DOS 1793203 und Houben-Weyl Bd. XII/1, 193) oder lassen sich auf analogem Wege herstellen. Verbindungen der Formel III sind zum Teil bekannt (vgl. Houblen-Weyl Bd. VII, 217 und 280 ; Ber *37,* 3190 (1904) ; Ann. *690,* 138 (1965)) oder lassen sich auf entsprechendem Wege herstellen. Zur hydrogenolytischen Abspaltung eines Restes $R_{10}$ verwendet man Wasserstoff in Gegenwart von Palladium-Kohlenstoff als Katalysator (z. B. Synthesis *1980,* 1028-32). Die Lösungsmittel sind die gleichen wie bei a) zuzüglich Essigester, die Reaktionstemperaturen liegen zwischen 0 und 100°, vorzugsweise 10-30°. In manchen Fällen ist es angebracht, die Umsetzung durch Zugabe von Basen zu beschleunigen ; als solche eignen sich Alkalihydroxide oder -alkoholate wie NaOH, KOH, $NaOCH_3$, KO-tert. Butyl oder auch tertiäre Stickstoffbasen wie Triethylamin oder Methyldiisopropylamin.

zu b) : Verbindungen der Formel IV lassen sich in allgemein bekannter Weise mittels Isocyanaten der Formel $R_4—N = C = O$, oder Chlorformylaminen der Formel $R_4R_5N—COCl$ in die Endprodukte der Formel I mit $A = —CH—OCONR_4R_5$ überführen, wobei im Falle der Verwendung von Isocyanaten $R_5 = H$ ist. Alkylierung, Acylierung oder Benzylierung an der Gruppe —OH führt u. a. zu Verbindungen mit $R_4 = (C_2\text{-}C_6)$Alkyl oder (Halogen) benzyl.

All diese Umsetzungen sind dem Fachmann wohlbekannt und bedürfen keiner weiteren Erläuterung.

Wie aus der Formel IV zu ersehen ist, entsteht bei der Addition der Phosphorverbindungen II an die Verbindungen der Formel III ein Asymmetriezentrum. Die Verbindungen der Formel I können daher als optische Isomere vorliegen, die ebenfalls Gegenstand der Erfindung sind.

Die erfindungsgemäßen Verbindungen besitzen eine ausgezeichnete und sehr breite herbizide Wirkung gegen ein breites Spektrum annueller sowie perennierender Ungräser und Unkräuter an Wegrändern, in Industrieanlagen oder Eisenbahnanlagen. Gegenstand der Erfindung sind daher auch herbizide Mittel, die die Verbindungen der Formel I enthalten, und deren Verwendung zur Bekämpfung von unerwünschtem Pflanzenwuchs.

Die Wirkstoffe eignen sich sowohl zur Anwendung in der Landwirtschaft als auch zu Unkrautbekämpfung. Ein Einsatz in ein- oder mehrjährigen landwirtschaftlichen Kulturen ist möglich, sofern durch die Art der Applikation und/oder das Alter der Kulturpflanzen sichergestellt wird, daß die Kulturpflanzen bzw. ihre empfindlichen grünen Teile keinen Schaden leiden. Beispiele für eine derartige Einsatzmöglichkeit sind Plantagen, Baumkulturen und Rebanlagen.

Da eine Anwendung der neuen Verbindungen in Nutzkulturen vor dem Auflaufen den Kulturpflanzen nur geringen oder keinen Schaden zufügt, kann man sie gegen Unkräuter noch vor dem Auflaufen der Saat bzw. vor der Aussaat oder nach der Ernte anwenden.

Die erfindungsgemäßen Verbindungen sind aber auch gegen bei der Ernte störenden Pflanzenwuchs der Nutzpflanze (z. B. Baumwolle, Kartoffel) selbst einsetzbar.

In Abhängigkeit von der angewendeten Dosis sind mit den neuen Verbindungen auch typische wachstumsregulierende Effekte erzielbar ; so können beispielsweise der Wuchs der Pflanzen, aber auch der Gehalt an erwünschten Pflanzeninhaltsstoffen beeinflußt werden. Damit eignen sich die Verbindungen als Wachstumsregulatoren in Nutzpflanzenkulturen wie z. B. Getreide, Mais, Zuckerrohr, Tabak, Reis und Sorghum. Andererseits lassen sich auch Pflanzenbestände regulieren, etwa Kulturrasen, oder auch Pflanzenbestände regulieren, etwa Kulturrasen, oder auch Pflanzengemeinschaften an Wege- und Straßenrändern sowie Zierpflanzen.

Durch Anwendung der erfindungsgemäßen Verbindungen wird das vegetative Wachstum bei einer

Vielzahl von mono- und dikotylen Pflanzen gehemmt und als Folge davon u. a. der Kohlehydratanteil in den Pflanzen oder deren Früchten erhöht. Die Folge davon ist vielfach eine positive Beeinflussung des Gehalts an erwünschten Pflanzeninhaltsstoffen wie Proteinen oder Kohlehydraten (Stärke, Zucker).

Beispielsweise wird bei Zuckerrohr und Zuckerrüben der Saccharosegehalt, bei Obst und Weintrauben der Fruchtzuckergehalt erhöht ; bei anderen Pflanzen wie Kartoffeln, Mais, Hirse (Sorghum) und Grünfutter (Klee, Luzerne) nimmt der Stärkegehalt zu. Die damit erzielten Vorteile sind offenkundig und bedürfen keiner Erläuterung.

Die Anwendung erfolgt etwa eine Woche bis 5 Monate vor der Ernte. Nach Ablauf dieser Zeit hat der durch die Wirkstoffe hervorgerufene Reifungsgrad und damit auch der Kohlehydratgehalt ein Maximum erreicht. Allgemein ist zu beachten, daß bei den Kulturen die Wachstumsgeschwindigkeit und Vegetationsdauer innerhalb beträchtlicher Grenzen variieren kann. Zuckerrohr z. B. benötigt je nach Standort und Klima 1-3 Jahre bis zur Erntereife. Entsprechend muß auch der Anwendungszeitpunkt variiert werden. Bei Zuckerrohr kann dieser z. B. 1 bis 13 Wochen vor der Ernte liegen.

Die Mittel können als Spritzpulver, emulgierbare Konzentrate, versprühbare Lösungen, Stäubemittel, Beizmittel, Dispersionen, Granulate oder Mikrogranulate in den üblichen Zubereitungen angewendet werden.

Spritzpulver sind in Wasser gleichmäßig dispergierbare Präparate, die neben dem Wirkstoff außer gegebenenfalls einem Verdünnungs- oder Inertstoff noch Netzmittel, z. B. polyoxethylierte Fettalkohole, Alkyl- oder Alkylphenylsulfonate und Dispergiermittel, z. B. ligninsulfonsaures Natrium, 2,2' dinaphthylmethan-6,6'-disulfonsaures Natrium, dibutylnaphthalinsulfonsaures Natrium oder auch oleoylmethyltaurinsaures Natrium enthalten. Die Herstellung erfolgt in üblicher Weise, z. B. durch Mahlen und Vermischen der Komponenten.

Emulgierbare Konzentrate können z. B. durch Auflösen des Wirkstoffes in einem inerten organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt werden. Bei flüssigen Wirkstoffen kannder Lösungsmittelanteil auch ganz oder teilweise entfallen. Als Emulgatoren können beispielsweise verwendet werden : Alkylarylsulfonsaure Calciumsalze wie Cadodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyglykolether, Sorbitanfettsäureester, Polyoxethylensorbitanfettsäureester oder Polyoxethylensorbitester.

Stäubemittel kann man durch Vermahlen des Wirkstoffes mit fein verteilten, festen Stoffen, z. B. Talkum, natürlichen Tonen wie Kaolin, Bentonit, Pyrophillit oder Diatomeenerde erhalten.

Granulate können entweder durch Verdüsen des Wirkstoffes auf adsorptionsfähiges, granuliertes Inertmaterial hergestellt werden oder durch Aufbringen von Wirkstoffkonzentrationen mittels Bindemitteln, z. B. Polyvinylalkohol, polyacrylsaurem Natrium oder auch Mineralölen auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise, gewünschtenfalls in Mischung mit Düngemitteln, granuliert werden.

In Spritzpulvern beträgt die Wirkstoffkonzentration z. B. etwa 10 bis 90 Gew.-% der Rest zu 100 Gew.-% besteht aus üblichen Formulierungsbestandteilen. Bei emulgierbaren Konzentraten kann die Wirkstoffkonzentration etwa 10 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Pentrations-, Lösungsmittel, Füll- oder Trägerstoffe.

Zur Anwendung werden die in handelsüblicher Form vorliegenden Konzentrate gegebenenfalls in üblicher Weise verdünnt, z. B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Auch Mischungen oder Mischformulierungen mit anderen Wirkstoffen, wie z. B. insektiziden, Akariziden, Herbiziden, Düngemittel, Wachstumsregulatoren oder Fungiziden sind gegebenenfalls möglich. Insbesondere bei Mischungen mit Fungiziden können teilweise auch synergistische Wirkungssteigerungen erzielt werden.

Die Anwendungskonzentrationen können je nach Verwendungszweck und Anwendungszeitpunkt innerhalb weiter Grenzen varrieren. Für die Verwendung als Herbizide kommen Konzentrationen zwischen 0.3 und 10, vorzugsweise 0.5-3 kg/ha in Betracht. Bei Verwendung als Wachstumsregulatoren sind die Anwendungskonzentrationen naturgemäß niedriger und liegen bei ca. 0.1-2 kg/ha, wobei je nach Pflanzenart die erforderliche Konzentration stark schwanken kann.

Die Erfindung wird durch die nachfolgenden Beispiele erläutert :

## A) Herstellungsbeispiele

Beispiel 1

2-(Dimethylphosphinoyl)-2-hydroxy-essigsäure

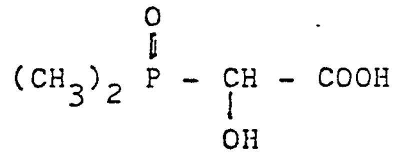

Zu einer Lösung von 15.6 g (0.2 mol) Dimethylphosphinoxid in 80 ml Ethylacetat läßt man 14.8 g (0.2 mol) Glyoxylsäurehydrat in 80 ml Ethylacetat tropfen. Dabei steigt die Temperatur leicht an. Man rührt 24 Stunden bei 25 °C, saugt das Produkt ab, wäscht mit wenig Ethylacetat und erhält nach Trocknung 20.2 g (66.5 %) des gewünschten Produktes vom Fp. 206-208°.

Beispiel 2

2-(Dimethylphosphinoyl)-2-hydroxy-essigsäuremethylester

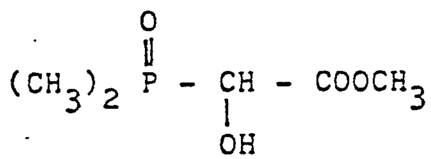

Zu einer Lösung von 15.6 g (0.2 mol) Dimethylphosphinoxid in 50 ml Dioxan tropft man die Lösung von 17.6 g (0.2 mol) Glyoxylsäuremethylester in 30 ml Dioxan. Man gibt eine Spatelspitze Natriummethylat zu, rührt 24 Stunden bei 25 °C, betreift den eingedampften Rückstand im Hochvakuum von anhaftendem Dioxan, nimmt in Ethylacetat auf und erhält nach Anreiben 16.4 g (49.4 %) farbloses Produkt vom Fp. 84-85°.

Beispiel 3

2-(Dimethylphosphinoyl)-2-hydroxyessigsäure-ammoniumsalz

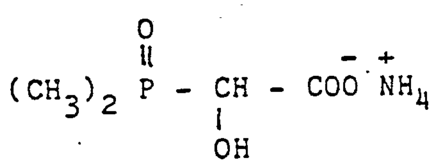

Zu einer Lösung von 15.2 g (0.1 mol) 2-(Dimethylphosphinoyl)-2-hydroxy-essigsäure in 10 ml Wasser tropft man 10 g einer 25 %igen wäßrigen Ammoniaklösung. Dabei steigt die Temperatur bis auf 38° an. Man rührt eine Stunde bei 25 °C und engt am Rotationsverdampfer ein. Der Rückstand wird zunächst mit Toluol azeotrop entwässert und anschließend mit Acetonitril ausgekocht. Es verbleiben 14.3 g (84.6 %) des Salzes vom Fp 183-186°.

Beispiel 4

(a) 2-(Dimethylphosphinoyl)-2-hydroxyessigsäure-propylammoniumsalz

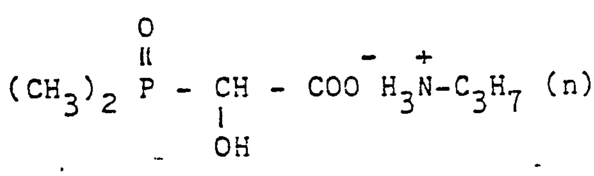

Zu einer Lösung von 15.2 g (0.1 mol) 2-(Dimethylphosphinoyl)-2-hydroxy-essigsäure in 30 ml Wasser tropft man 8.9 g (0.15 mol) Propylamin. Dabei steigt die Temperatur von 23 °C auf 38 °C. Man rührt eine Stunde bei 25 °C, engt am Rotationsverdampfer ein und entwässert den Rückstand durch mehrmaliges Abdestillieren mit Toluol. Nach Entfernung des Toluols im Hochvakuum verbleibt zunächst ein Sirup von $n_D^{22}$ = 1.486 9, der nach längerem Stehen wachsartig erstarrt.

(b) In analoger Weise erhält man das Isopropylammoniumsalz, das ebenfalls als wachsartige Substanz anfällt.

## Beispiel 5

2-(Dimethylphosphinoyl)-2-(methoxymethylcarbamoyloxy)-essigsäuremethylester

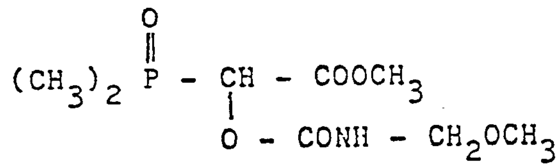

Zu einer Lösung von 12.5 g (0.075 mol) 2-(Dimethylphosphinoyl)-2-hydroxy-essigsäuremethylester in 50 ml abs. Dioxan gibt man zunächst 0.2 g Triethylamin und tropft anschließend 6.6 g (0.075 mol) Methoxymethylisocyanat in 20 ml abs. Dioxan zu. Man rührt 24 Stunden bei 25°, zieht das Lösungsmittel ab und kristallisiert den Rückstand aus Diisopropyläther/Ethylacetat um. Man erhält 19.6 g (98 %) des gewünschten Produktes vom Fp. 101°.

## Beispiel 6

2-(Dimethylphosphinoyl)-2-hydroxy-essigsäurehydrazid

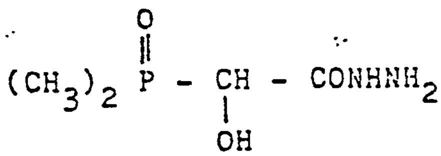

Zu einer Lösung von 21 g (0.012 6 mol) 2-(Dimethylphosphinoyl)-2-hydroxyessigsäuremethylester in 80 ml Ethanol tropft man 8.7 g (0.138 mol) Hydrazinhydrat (80 %ig) so zu, daß die Temperatur nicht über 25 °C steigt. Man rührt 14 Stunden bei 25 °C, engt am Rotationsverdampfer ein und befreit den Rückstand im Hochvakuum von anhaftendem Lösungsmittel. Nach Diegerieren mit Diisopropylether erhält man 18.8 g (89.9 %) eines farblosen Pulvers vom Fp. 152-155 °C.

## Beispiel 7

2-(Dimethylphosphinoyl)-2-hydroxy-essigsäureamid

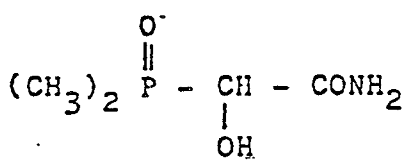

16.6 g (0.1 mol) 2-(Dimethylphosphinoyl)-2-hydroxyessigsäuremethylester werden in 70 ml Methanol gelöst, das zuvor 10 min mit $NH_3$-Gas begast wurde. Nach sechstägigem Stehen im Bombenrohr bei 25° wird filtriert, eingeengt und der ölige Rückstand mit Ethylacetat digeriert. Man erhält 12.4 g (82.2 %) des Amids vom Fp. 155°.

In analoger Weise erhält man die folgenden Verbindungen :

Tabelle 1

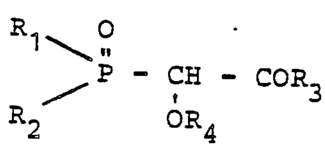

| Beisp. Nr. | $R_1$ | $R_2$ | $R_4$ | $R_3$ | Fp [°C] |
|---|---|---|---|---|---|
| 8 | $—CH_3$ | $—CH_3$ | $CONHCH_3$ | $—OCH_3$ | 133 |
| 9 | $—CH_3$ | $—CH_3$ | $CONHC_4H_9(n)$ | $—OCH_3$ | Sirup |
| 10 | $—CH_3$ | $—CH_3$ | $CONHCH_2COOC_2H_5$ | $—OCH_3$ | 111 |
| 11 | $—CH_3$ | $—CH_3$ | 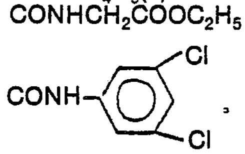 | $—OCH_3$ | 291-193 |

Tabelle I (Fortsetzung)

| Beisp. Nr. | $R_1$ | $R_2$ | $R_4$ | $R_3$ | Fp [°C] |
|---|---|---|---|---|---|
| 12 | $-CH_3$ | $-CH_3$ | 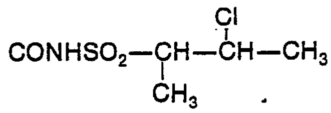 | $-OCH_3$ | 126-128 |
| 13 | $-CH_3$ | $-CH_3$ | $CONHSO_2-CH=CH-CH_3$ | $-OCH_3$ | 185 |
| 14 | $-CH_3$ | $-CH_3$ | $CH_3$ | $-OCH_3$ | |
| 15 | $-CH_3$ | $-CH_3$ | $CH_2C_6H_5$ | $-OCH_3$ | |
| 16 | $-C_2H_5$ | $-C_2H_5$ | H | $-OH$ | 168-171(Zers.) |
| 17 | $-CH_3$ | $-CH_3$ | H | $-OC_3H_7(n)$ | |
| 18 | $-CH_3$ | $-CH_3$ | H | $-OC_3H_7(i)$ | |
| 19 | $-CH_3$ | $-CH_3$ | H | $-OC_6H_4CF_3(p)$ | |
| 20 | $-CH_3$ | $-CH_3$ | H | $-OCH_2CH_2Cl$ | |
| 21 | $-CH_3$ | $-CH_3$ | H | $-OCH_2CH_2CH_2Cl$ | |
| 22 | $-CH_3$ | $-CH_3$ | H | 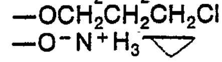 | |
| 23 | $-CH_3$ | $-CH_3$ | H | 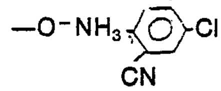 | |

B) Formulierungsbeispiele

a) Ein Stäubemittel wird erhalten, indem man 10 Gewichtsteile Wirkstoff und 90 Gewichtsteile Talkum oder Interstoff mischt und in einer Schlagmühle zerkleinert.

b) Ein in Wasser leicht dispergierbares, benetzbares Pulver wird erhalten, indem man 25 Gewichtsteile Wirkstoff, 64 Gewichtsteile kaolinhaltigen Quarz als Inertstoff, 10 Gewichtsteile ligninsulfonsaures Kalium und 1 Gewichtsteil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoff mit 6 Gewichtsteilen Alkylphenolpolyglykolether (Triton X® 207), 3 Gewichtsteilen Isotridecanolpolyglykolether (8 AeO) und 71 Gewichtsteilen paraffinischem Mineralöl (Siedebereich z. B. ca. 255 bis über 377 °C) mischt und in einer Reibkugelmühle auf eine Feinheit von unter 5 Mikron vermahlt.

d) Ein emulgierbares Konzentrat wird erhalten aus 15 Gewichtsteilen Wirkstoff, 75 Gewichtsteilen Cyclohexanon als Lösungsmittel und 10 Gewichtsteilen oxethyliertes Nonylphenol (10 AeO) als Emulgator.

C) Biologische Beispiele

Beispiel 1

Samen bzw. Rhizomstücke von Ungräser und Unkräutern wurden in sandiger Lehmerde in Plastiktöpfen (Ø 9 cm) ausgesät und unter guten Wachstumsbedingungen im Gewächshaus 3-5 Wochen angezogen. Anschließend wurden die als Spritzpulver oder wäßrige Lösungen formulierten erfindungsgemäßen Verbindungen in Form von wäßrigen Suspensionen bzw. versprühbaren Lösungen auf die oberirdischen Pflanzenteile gesprüht. Die verwendete Wassermenge entsprach dabei 600-800 l/ha.

Nach ca. 3 Wochen Standzeit im Gewächshaus unter optimalen Wachstumsbedingungen wı ᴉe die herbizide Wirkung visuell bonitiert.

In Tabelle 1 sind die Ergebnisse der Versuche mit den neuen erfindungsgemäßen Verbindungen zuammengestellt. Folgender Schlüssel wurde dabei benutzt :

0 = keine Wirkung
1 = 0-20 % Wirkung
2 = 20-40 % Wirkung
3 = 40-60 % Wirkung
4 = 60-80 % Wirkung
5 = 80-100 % Wirkung

Die in Tabelle 1 dargestellten Werte belegen klar die sehr gute herbizide Wirksamkeit der neuen Verbindungen gegen ein breites Spektrum wirtschaftlich wichtiger Schadpflanzen.

Abkürzungen zu Tabelle 1 :
SIA = Sinapis arvensis

AMR = Amaranthus retroflexus
STM = Stellaria media
AS = Avena sativa
ECG = Echinochloa crus-galli
LOM = Lolium multiflorum
a.i. = Aktivsubstanz

Tabelle 1

Herbizide Wirkung im Nachauflaufverfahren

| Beispiel Nr. | Dosis kg a.i./ha | herbizide Wirkung SIA | AMR | STM | AS | ECG | LOM |
|---|---|---|---|---|---|---|---|
| 6 | 10 | 5 | 3 | 5 | 3 | 5 | 5 |
| 9 | 10 | 5 | 5 | 4 | 4 | 4 | 4 |
| 12 | 10 | 5 | 5 | 5 | 5 | 5 | 5 |
| 1 | 10 | 5 | 5 | 5 | 5 | 5 | 5 |
| 3 | 10 | 5 | 5 | 5 | 5 | 5 | 5 |
| 4a | 10 | 5 | 5 | 5 | 5 | 5 | 5 |
| 2 | 10 | 5 | 5 | 5 | 5 | 5 | 5 |
| 4b | 10 | 5 | 5 | 5 | 5 | 5 | 5 |

Beispiel 2

Zuckerrohrpflanzen wurden im Freiland mit wäßrigen Suspensionen von Emulsionskonzentraten der Vergleichsverbindungen in verschiedenen Konzentrationen gespritzt. Nach 4 und 8 Wochen wurden Pflanzen entnommen und auf ihren Gehalt an Rohrzucker (Saccharose) untersucht (mittels der sog. « press method », T. Tanimoto, Hawaiian Planters Record *57*, 133 (1964)).

Dabei wird der Zuckergehalt polarimetrisch bestimmt und in « Pol Prozent Rohr » ausgedrückt ; diese Zahl entsprecht dem Prozentsatz Saccharose in der Lösung unter der Annahme, daß Saccharose die einzige Substanz in der Zuckerlösung ist, die die Ebene des polarisierten Lichts dreht. Die Bestimmung der « Pol % Rohr » ist ein anerkanntes Verfahren zur Bestimmung des Zuckergehaltes von Zuckerrohr.

Die Ergebnisse sind in der folgenden Tabelle 2 zusammengestellt :

Tabelle 2

| | Aufwandmenge kg a.i./ha | Saccharosegehalt (Pol % Rohr) Wochen nach Behandlung 4 | 8 |
|---|---|---|---|
| Verbindung I Beispiel Nr. 1 | 2.5 | 13,9 | 14,8 |
| Verbindung II Beispiel Nr. 12 | 2.5 | 12,4 | 13,3 |
| Kontrolle (unbehandelt) | — | 10,0 | 11,2 |

**Patentansprüche** (für die Vertragsstaaten : BE, CH, DE, FR, GB, IT, LI, NL, SE)

1. Verbindungen der allgemeinen Formel

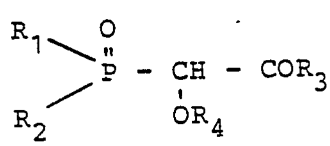

(I)

worin

$R_1$ und $R_2$ unabhängig voneinander Methyl und Ethyl

$R_3$ —OH, —SH ; $(C_1\text{-}C_{12})$-Alkoxy, $(C_3\text{-}C_8)$-Cycloalkoxy, $(C_3\text{-}C_6)$-Alkenyloxy, $(C_3\text{-}C_6)$-Alkinyloxy, Phenoxy oder Benzyloxy, wobei die genannten Gruppen ihrerseits durch OH, Halogen, $CF_3$, $(C_1\text{-}C_4)$-Alkyl oder $(C_1\text{-}C_4)$-Alkoxy substituiert sein können ; $(C_1\text{-}C_6)$-Alkylthio, $(C_3\text{-}C_8)$-Cycloalkylthio, $(C_3\text{-}C_6)$-Alkenylthio, $(C_3\text{-}C_6)$-Alkinylthio, Phenylthio oder Benzylthio, wobei die genannten Gruppen ihrerseits durch Halogen, $CF_3$, $(C_1\text{-}C_4)$-Alkyl oder $(C_1\text{-}C_4)$-Alkoxy substituiert sein können ; Amino, Hydroxylamino ; $(C_1\text{-}C_4)$-Alkylamino, O-$(C_1\text{-}C_4)$-Alkylhydroxylamino, Di-(C1-$C_4$)-alkyl-amino, Anilino, $(C_7\text{-}C_{10})$-Phenylalkylamino, Di-$(C_7\text{-}C_{10})$-phenylalkylamino, N-Phenyl-N-$(C_1\text{-}C_4)$-alkylamino, N-Phenyl-N-$(C_3\text{-}C_6)$-alkenylamino- oder N-Phenyl-N-$(C_3\text{-}C_6)$-alkinylamino, wobei die genannten Gruppen ihrereits durch OH, Halogen, $(C_1\text{-}C_4)$-Alkyl oder $(C_1\text{-}C_4)$-Alkoxy substituiert sein können ; Hydrazino, β-$(C_1\text{-}C_4)$-Alkylhydrazino, β,β-Di-$(C_1\text{-}C_4)$-alkylhydrazino, Piperidino, Pyrrolidino, Morpholino, 2,6-Dimethylmorpholino oder ein Rest der Formel

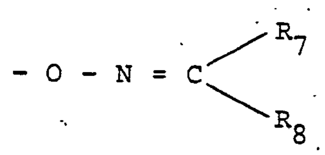

$R_4$ Wasserstoff, $(C_1\text{-}C_6)$-Alkyl, Allyl, Propargyl, Benzyl, Halogenbenzyl oder $—CONR_5R_6$ ;

$R_5$ und $R_6$ unabhängig voneinander Wasserstoff, $(C_1\text{-}C_{12})$-Alkyl, $(C_3\text{-}C_8)$-Cycloalkyl, $(C_3\text{-}C_6)$-Alkenyl, $(C_3\text{-}C_6)$-Alkinyl, Phenyl, Benzyl Benzoyl, Phenoxysulfonyl, $(C_1\text{-}C_{12})$-Alkylsulfonyl, $(C_3\text{-}C_6)$-Alkenylsulfonyl oder Phenylsulfonyl, wobei die genannten Gruppen ihrerseits durch Halogen, $CF_3$, CN, $(C_1\text{-}C_4)$-Alkoxy oder $(C_1\text{-}C_4)$-Alkoxycarbonyl substituiert sein können,

$R_7$ und $R_8$ unabhängig voneinander $(C_1\text{-}C_{12})$-Alkyl ; oder zusammen einen Alkylenrest mit 3-8 C-Atomen bedeuten,

sowie deren Salze.

2. Verbindungen gemäß Anspruch 1, dadurch gekennzeichnet, daß $R_1$ und $R_2$ Methyl, $R_4$ Wasserstoff und $R_3$ —OH oder —O—$(C_1\text{-}C_{10})$-Alkyl bedeuten, sowie (falls $R_3$ = OH) deren Salze mit anorganischen oder organischen Basen.

3. 2-(Dimethylphosphinoyl)-2-hydroxyessigsäure, ihr Methylester sowie ihre Ammonium- und $(C_1\text{-}C_4)$ Alkylammoniumsalze.

4. Herbizide und wachstumsregulierende Mittel, gekennzeichnet durch einen Gehalt an einer Verbindung der Formel I.

5. Verfahren zur Herstellung von Verbindungen der Formel I, dadurch gekennzeichnet, daß man

a) zur Herstellung von Verbindungen mit : $R_4$ = Wasserstoff Verbindungen der Formel

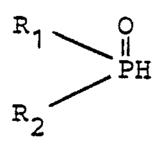

(II)

mit Verbindungen der Formel

$$O = CH — COR_3 \qquad (III)$$

umsetzt und

b) zur Herstellung von Verbindungen mit $R_4 \neq$ Wasserstoff die gemäß a) erhaltenen Verbindungen der Formel

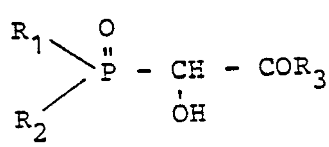

(IV)

durch Alkylierung, Benzylierung oder Acylierung in andere Verbindungen der Formel I überführt, und ggf. Säuren in ihre Salze umwandelt.

6. Verfahren zur Bekämpfung von unerwünschtem Pflanzenwuchs, dadurch gekennzeichnet, daß man befallene Flächen mit einer wirksamen Menge einer Verbindung gemäß Anspruch 1 behandelt.

7. Verfahren zur Steuerung des pflanzlichen Wachstums und der pflanzlichen Entwicklung sowie zur Erhöhung des Gehalts an erwünschten Pflanzeninhaltsstoffen in Nutzpflanzen, dadurch gekennzeichnet, daß man die Pflanzen mit einer wirksamen Menge einer Verbindung gemäß Anspruch 1 behandelt.

8. Verwendung von Verbindungen gemäß Anspruch 1 zur Bekämpfung von unerwünschtem Pflanzenwuchs bzw. zur Steuerung des Pflanzenwachstums und zur Erhöhung des Gehalts an erwünschten Pflanzeninhaltsstoffen bei Nutzpflanzen.

**Patentansprüche** (für den Vertragsstaat AT)

1. Herbizide und wachstumsregulierende Mittel, gekennzeichnet durch einen Gehalt an einer Verbindung der Formel I

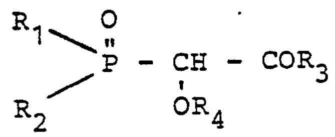

(I)

worin

$R_1$ und $R_2$ unabhängig voneinander Methyl oder Ethyl,

$R_3$ —OH, —SH ; ($C_1$-$C_{12}$)-Alkoxy, ($C_3$-$C_8$)-Cycloalkoxy, ($C_3$-$C_6$)-Alkenyloxy, ($C_3$-$C_6$)-Alkinyloxy, Phenoxy oder Benzyloxy, wobei die genannten Gruppen ihrerseits durch OH, Halogen, $CF_3$, ($C_1$-$C_4$)-Alkyl oder ($C_1$-$C_4$)-Alkoxy substituiert sein können ; ($C_1$-$C_6$)-Alkylthio, ($C_3$-$C_8$)-Cycloalkylthio, ($C_3$-$C_6$)-Alkenylthio, ($C_3$-$C_6$)-Alkinylthio, Phenylthio oder Benzylthio, wobei die genannten Gruppen ihrerseits durch Halogen, $CF_3$, ($C_1$-$C_4$)-Alkyl oder ($C_1$-$C_4$)-Alkoxy substituiert sein können ; Amino, Hydroxylamino ; ($C_1$-$C_4$)-Alkylamino, —O—($C_1$-$C_4$)-Alkylhydroxylamino, Di-($C_1$-$C_4$)-alkylamino, Anilino, ($C_7$-$C_{10}$)-Phenylalkylamino, Di-($C_7$-$C_{10}$)-phenylalkylamino, N-Phenyl-N-($C_1$-$C_4$)-alkylamino, N-Phenyl-N-($C_3$-$C_6$)-alkenylamino- oder N-Phenyl-N-($C_3$-$C_6$)-alkinylamino, wobei die genannten Gruppen ihrerseits durch OH, Halogen, ($C_1$-$C_4$)-Alkyl oder ($C_1$-$C_4$)-Alkoxy substituiert sein können ; Hydrazino, β-($C_1$-$C_4$)-Alkylhydrazino, β,β-Di-($C_1$-$C_4$)-alkylhydrazino, Piperidino, Pyrrolidino, Morpholino, 2,6-Dimethylmorpholino oder ein Rest der Formel

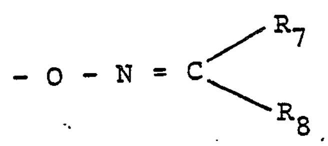

$R_4$ Wasserstoff, ($C_1$-$C_6$)-Alkyl, Allyl, Propargyl, Benzyl, Halogenbenzyl ; oder —$CONR_5R_6$ ;

$R_5$ und $R_6$ unabhängig voneinander Wasserstoff, ($C_1$-$C_{12}$)-Alkyl, ($C_3$-$C_8$)-Cycloalkyl, ($C_3$-$C_6$)-Alkenyl, ($C_3$-$C_6$)-Alkinyl, Phenyl, Benzyl, Benzoyl, Phenoxysulfonyl, ($C_1$-$C_{12}$)-Alkylsulfonyl, ($C_3$-$C_6$)-Alkenylsulfonyl oder Phenylsulfonyl, wobei die genannten Gruppen ihrerseits durch Halogen, $CF_3$, CN, ($C_1$-$C_4$)-Alkoxy oder ($C_1$-$C_4$)-Alkoxycarbonyl substituiert sein können,

$R_7$ und $R_8$ unabhängig voneinander ($C_1$-$C_{12}$)-Alkyl ; oder zusammen einen Alkylenrest mit 3-8 C-Atomen bedeuten,

sowie deren Salze.

2. Verwendung von Verbindungen der Formel I zur Bekämpfung von unerwünschtem Pflanzenwuchs bzw. zur Steuerung des Pflanzenwachstums und zur Erhöhung des Gehalts an erwünschten Pflanzeninhaltsstoffen bei Nutzpflanzen.

**Claims** (for the Contracting States : BE, CH, DE, FR, GB, IT, LI, NL, SE)

1. Compounds of the formula

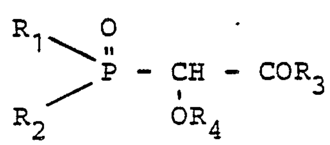

(I)

in which

$R_1$ and $R_2$ independently of one another are methyl or ethyl

$R_3$ denotes —OH, —SH ; ($C_1$-$C_{12}$)-alkoxy, ($C_3$-$C_8$)-cycloalkoxy, ($C_3$-$C_6$)-alkenyloxy, ($C_3$-$C_6$)-alkynyloxy, phenoxy or benzyloxy, it being possible for the groups mentioned in turn to be substituted by OH, halogen, $CF_3$, ($C_1$-$C_4$)-alkyl or ($C_1$-$C_4$)-alkoxy ; ($C_1$-$C_6$)-alkylthio, ($C_3$-$C_8$)-cycloalkylthio, ($C_3$-$C_6$)-

alkenylthio, $(C_3\text{-}C_6)$-alkynylthio, phenylthio or benzylthio, it being possible for the groups mentioned in turn to be substituted by halogen, $CF_3$, $(C_1\text{-}C_4)$-alkyl or $(C_1\text{-}C_4)$-alkoxy ; amino, hydroxylamino ; $(C_1\text{-}C_4)$-alkylamino, O-$(C_1\text{-}C_4)$-alkylhydroxylamino, di-$(C_1\text{-}C_4)$-alkylamino, anilino, $(C_7\text{-}C_{10})$-phenylalkylamino, di-$(C_7\text{-}C_{10})$-phenylalkylamino, N-phenyl-N-$(C_1\text{-}C_4)$-alkylamino, N-phenyl-N-$(C_3\text{-}C_6)$-alkenylamino or N-phenyl-N-$(C_3\text{-}C_6)$-alkynylamino, it being possible for the groups mentioned in turn to be substituted by OH, halogen, $(C_1\text{-}C_4)$-alkyl or $(C_1\text{-}C_4)$-alkoxy : hydrazino, β-$(C_1\text{-}C_4)$-alkylhydrazino, β,β-di-$(C_1\text{-}C_4)$-alkylhydrazino, piperidino, pyrrolidino, morpholino, 2,6-dimethylmorpholino or a radical of the formula

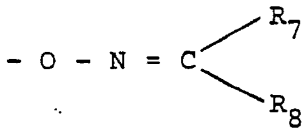

$R_4$ denotes hydrogen, $(C_1\text{-}C_6)$-alkyl, allyl, propargyl, benzyl, halogenobenzyl or $-CONR_5R_6$ ;

$R_5$ and $R_6$ independently of one another denote hydrogen, $(C_1\text{-}C_{12})$-alkyl, $(C_3\text{-}C_8)$-cycloalkyl, $(C_3\text{-}C_6)$-alkenyl, $(C_3\text{-}C_6)$-alkynyl, phenyl, benzyl, benzoyl, phenoxysulfonyl, $(C_1\text{-}C_{12})$-alkylsulfonyl, $(C_3\text{-}C_6)$-alkenylsulfonyl or phenylsulfonyl, it being possible for the groups mentioned in turn to be substituted by halogen, $CF_3$, CN, $(C_1\text{-}C_4)$-alkoxy or $(C_1\text{-}C_4)$-alkoxycarbonyl ; and $R_7$ and $R_8$ independently of one another denote $(C_1\text{-}C_{12})$-alkyl ; or together denote an alkylene radical with 3-8 carbon atoms, and salts thereof.

2. A compound as claimed in claim 1, wherein $R_1$ and $R_2$ are methyl, $R_4$ is hydrogen and $R_3$ is $-OH$ or $-O-(C_1\text{-}C_{10})$-alkyl and (if $R_3$ = OH) a salt thereof with an inorganic or organic base.

3. 2-(Dimethylphosphinoyl)-2-hydroxyacetic acid, its methyl ester and its ammonium and $(C_1\text{-}C_4)$-alkylammonium salts.

4. A herbicidal and growth-regulating agent, characterized by a content of a compound of the formula I.

5. A process for the preparation of a compound of the formula I, which comprises

a) for the preparation of compounds in which $R_4$ is hydrogen reacting compounds of the formula

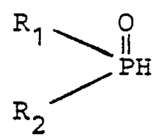

(II)

with compounds of the formula

$$O = CH - COR_3 \qquad (III)$$

or

b) for the preparation of compounds with $R_4$ unlike hydrogen, converting the compounds of the formula

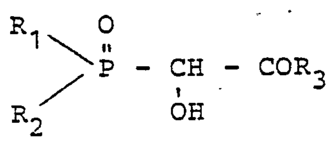

(IV)

obtained according to a) into another compound of the formula I by alkylation, benzylation or acylation and, if desired, or converting acids into their salt.

6. A method of combating undesirable plant growth, which comprises treating affected areas with an effective amount of a compound as claimed in claim 1.

7. A method of controlling plant growth and plant development and of increasing the amount of desirable plant contents in useful plants, which comprises treating the plants with an effective amount of a compound as claimed in claim 1.

8. A method of using a compound as claimed in claim 1 for combating undesirable plant growth or for controlling plant growth and for increasing the amount of desired plant contents in useful plants.

**Claims** (for the Contracting State AT)

1. Herbicidal and growth-regulating agents, comprising compounds of the formula

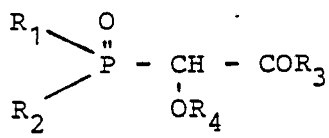 (I)

in which

$R_1$ and $R_2$ independently of one another are methyl or ethyl,

$R_3$ denotes —OH, —SH ; $(C_1\text{-}C_{12})$-alkoxy, $(C_3\text{-}C_8)$-cycloalkoxy, $(C_3\text{-}C_6)$-alkenyloxy, $(C_3C_6)$-alkynyloxy, phenoxy or benzyloxy, it being possible for the groups mentioned in turn to be substituted by OH, halogen, $CF_3$, $(C_1\text{-}C_4)$-alkyl or $(C_1\text{-}C_4)$-alkoxy ; $(C_1\text{-}C_6)$-alkylthio, $(C_3\text{-}C_8)$-cycloalkylthio, $(C_3\text{-}C_6)$-alkenylthio, $(C_3\text{-}C_6)$-alkynylthio, phenylthio or benzylthio, it being possible for the groups mentioned in turn to be substituted by halogen, $CF_3$, $(C_1\text{-}C_4)$-alkyl or $(C_1\text{-}C_4)$-alkoxy ; amino, hydroxylamino ; $(C_1\text{-}C_4)$-alkylamino, O-$(C_1\text{-}C_4)$-alkylhydroxylamino, di-$(C_1\text{-}C_4)$-alkylamino, anilino, $(C_7\text{-}C_{10})$-phenylalkylamino, di-$(C_7\text{-}C_{10})$-phenylalkylamino, N-phenyl-N-$(C_1\text{-}C_4)$-alkylamino, N-phenyl-N-$(C_3\text{-}C_6)$-alkenylamino or N-phenyl-N-$(C_3\text{-}C_6)$-alkynylamino, it being possible for the groups mentioned in turn to be substituted by OH, halogen, $(C_1\text{-}C_4)$-alkyl or $(C_1\text{-}C_4)$-alkoxy ; hydrazino, β-$(C_1\text{-}C_4)$-alkylhydrazino, β,β-di-$(C_1\text{-}C_4)$-alkylhydrazino, piperidino, pyrrolidino, morpholino, 2,6-dimethylmorpholino or a radical of the formula

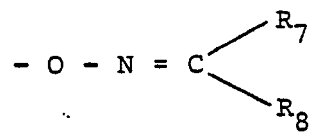

$R_4$ denotes hydrogen, $(C_1\text{-}C_6)$-alkyl, allyl, propargyl, benzyl, halogenobenzyl or $—CONR_5R_6$,

$R_5$ and $R_6$ independently of one another denote hydrogen, $(C_1\text{-}C_{12})$-alkyl, $(C_3\text{-}C_8)$-cycloalkyl, $(C_3\text{-}C_6)$-alkenyl, $(C_3\text{-}C_6)$-alkynyl, phenyl, benzyl, benzoyl, phenoxysulfonyl, $(C_1\text{-}C_{12})$-alkylsulfonyl, $(C_3\text{-}C_6)$-alkenylsulfonyl or phenylsulfonyl, it being possible for the groups mentioned in turn to be substituted by halogen, $CF_3$, CN, $(C_1\text{-}C_4)$-alkoxy or $(C_1\text{-}C_4)$-alkoxycarbonyl ; and

$R_7$ and $R_8$ independently of one another denote $(C_1\text{-}C_{12})$-alkyl ; or together denote an alkylene radical with 3-8 carbon atoms,

and salts thereof.

2. A method of using a compound of formula I for combating undesirable plant growth or for controlling plant growth and for increasing the amount of desired plant contents in useful plants.

**Revendications** (pour les Etats contractants : BE, CH, DE, FR, GB, IT, LI, NL, SE)

1. Composés de formule générale

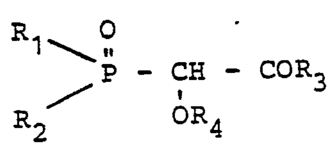 (I)

dans laquelle

$R_1$ et $R_2$ désignent chacun, indépendamment l'un de l'autre, le groupe méthyle ou éthyle,

$R_3$ représente —OH, —SH ; un alcoxy en $C_1\text{-}C_{12}$, un cycloalcoxy en $C_3\text{-}C_8$, un alcényloxy ou un alcynyloxy en $C_3\text{-}C_6$, un phénoxy ou un benzyloxy, tous ces groupes pouvant porter eux-mêmes un OH, un halogène, un groupe $CF_3$, un alkyle ou un alcoxy en $C_1\text{-}C_4$ ; un alkylthio en $C_1\text{-}C_6$, un cycloalkylthio en $C_3$ à $C_8$, un alcénylthio ou un alcynylthio en $C_3\text{-}C_6$, un phénylthio ou un benzylthio, tous ces groupes pouvant également porter eux-mêmes un halogène, un groupe $CF_3$, un alkyle ou un alcoxy en $C_1\text{-}C_4$ ; un groupe amino ou hydroxylamino, un $(C_1\text{-}C_4)$-alkylamino, un O-$(C_1\text{-}C_4)$-alkylhydroxylamino, un di-$(C_1\text{-}C_4)$-alkylamino, un anilino, un $(C_7\text{-}C_{10})$-phénylalkylamino, un di-$(C_7\text{-}C_{10})$-phénylalkylamino, un N-phényl-N-$(C_1\text{-}C_4)$-alkylamino, un N-phényl-N-$(C_3\text{-}C_6)$-alcénylamino ou un N-phényl-N-$(C_3\text{-}C_6)$-alcynylamino, tous ces groupes pouvant également porter eux-mêmes un OH, un halogène, un $(C_1\text{-}C_4)$-alkyle ou un $(C_1\text{-}C_4)$-alcoxy ; un groupe hydrazino, β-$(C_1\text{-}C_4)$-alkylhydrazino, β,β-di-$(C_1\text{-}C_4)$-alkylhydrazino, pipéridino, pyrrolidino, morpholino, 2,6-diméthylmorpholino ou un radical

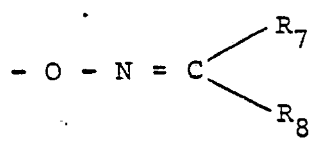

et

$R_4$ représente l'hydrogène ou un groupe ($C_1$-$C_6$)-alkyle allyle, propargyle, benzyle, halogénobenzyle ou —$CONR_5R_6$,

$R^5$ et $R^6$ désignant chacun, indépendamment l'un de l'autre, l'hydrogène ou un groupe ($C_1$-$C_{12}$) alkyle ($C_3$-$C_8$)-cycloalkyle, ($C_3$-$C_6$)-alcényle, ($C_3$-$C_6$)-alcynyle, phényle, benzyle, benzoyle, phénoxysulfonyle ($C_1$-$C_{12}$)-alkylsulfonyle, ($C_3$-$C_6$)-alcénylsulfonyle ou phénylsulfonyle, groupes qui peuvent porter un halogène, un groupe $CF_3$, CN, ($C_1$-$C_4$)-alcoxy ou ($C_1$-$C_4$)-alcoxycarbonyle, et

$R_7$ et $R_8$ désignent chacun, indépendamment l'un de l'autre, un ($C_1$-$C_{12}$) alkyle ; ou bien forment ensemble un alkylène en $C_3$ à $C_8$,

ainsi que leurs sels.

2. Composés selon la revendication 1, caractérisés en ce que $R_1$ et $R_2$ sont chacun le groupe méthyle, $R_4$ est l'hydrogène et $R_3$ le groupe —OH ou un groupe —O—($C_1$-$C_{10}$)-alkyle, ainsi que leurs sels formés avec des bases minérales ou organiques dans le cas où $R_3$ est un groupe OH.

3. Acide 2-(diméthylphosphinoyl)-2-hydroxyacétique, son ester méthylique et ses sels d'ammonium et d'alkylammoniums en $C_1$-$C_4$.

4. Produits herbicides et régulateurs de la croissance de végétaux, caractérisés en ce qu'ils contiennent un composé de formule I selon l'une quelconque des revendications précédentes.

5. Procédé de préparation des composés de formule I selon la revendication 1, caractérisé en ce que :

a) pour préparer des composés dans lesquels $R_4$ est l'hydrogène, on fait réagir des composés de formule

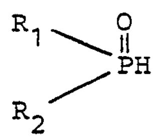

(II)

avec des composés de formule

$$O = CH — COR_3 \qquad (III)$$

et

b) pour préparer des composés dans lesquels $R_4$ n'est pas l'hydrogène, on transforme en d'autres composés de formule I les composés qui ont été obtenus ci-dessus en a), de formule

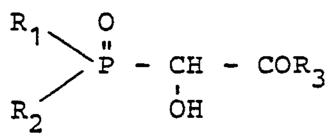

(IV)

par alkylation, acylation ou benzylation,
et le cas échéant on transforme les acides libres ainsi obtenus en sels.

6. Procédé de lutte contre la croissance de plantes adventices, procédé caractérisé en ce que l'on traite les zones atteintes avec des doses appropriées de composés selon la revendication 1.

7. Procédé pour diriger la croissance et le développement de plantes et pour accroître leur teneur en substances utiles, procédé caractérisé en ce que l'on traite les plantes avec une dose appropriée d'un composé selon la revendication 1.

8. L'emploi de composés selon la revendication 1 pour lutter contre la croissance de plantes adventices ou pour diriger la croissance de plantes cultivées et pour accroître leurs teneurs en substances utiles.

**Revendications** (pour l'Etat contractant AT)

1. Produits herbicides et régulateurs de la croissance de végétaux, caractérisés en ce qu'ils contiennent un composé de formule I ci-dessous :

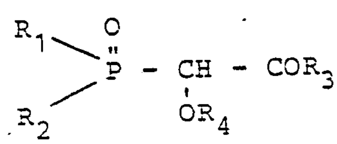

(I)

dans laquelle

$R_1$ et $R_2$ désignent chacun, indépendamment l'un de l'autre, le groupe méthyle ou éthyle,

$R_3$ représente —OH, —SH ; un alcoxy en $C_1$-$C_{12}$, un cycloalcoxy en $C_3$-$C_8$, un alcényloxy ou un alcynyloxy en $C_3$-$C_6$, un phénoxy ou un benzyloxy, tous ces groupes pouvant porter eux-mêmes un OH, un halogène, un groupe $CF_3$, un alkyle ou un alcoxy en $C_1$-$C_4$ ; un alkylthio en $C_1$-$C_6$, un cycloalkylthio en $C_3$ à $C_8$, un alcénylthio ou un alcynylthio en $C_3$-$C_6$, un phénylthio ou un benzylthio, tous ces groupes pouvant également porter eux-mêmes un halogène, un groupe $CF_3$, un alkyle ou un alcoxy en $C_1$-$C_4$ ; un groupe amino ou hydroxylamino ; un ($C_1$-$C_4$)-alkylamino, un O-($C_1$-$C_4$)-alkylhydroxylamino, un di-($C_1$-$C_4$)-alkylamino, un anilino, un ($C_7$-$C_{10}$)-phénylalkylamino, un di-($C_7$-$C_{10}$)-phénylalkylamino, un N-phényl-N-($C_1$-$C_4$)-alkylamino, un N-phényl-N-($C_3$-$C_6$)-alcénylamino ou un N-phényl-N-($C_3$-$C_6$)-alcynylamino, tous ces groupes pouvant également porter eux-mêmes un OH, un halogène, un ($C_1$-$C_4$)-alkyle ou un ($C_1$-$C_4$)-alcoxy ; un groupe hydrazino, β-($C_1$-$C_4$)-alkyl-hydrazino, β,β-di-($C_1$-$C_4$)-alkylhydrazino, pipéridino, pyrrolidino, morpholino, 2,6-diméthylmorpholino ou un radical

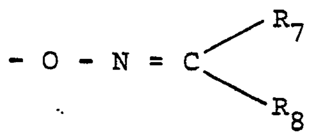

et

$R_4$ représente l'hydrogène ou un groupe ($C_1$-$C_6$)-alkyle allyle, propargyle, benzyle, halogénobenzyle ou —$CONR_5R_6$,

$R^5$ et $R^6$ désignant chacun, indépendamment l'un de l'autre, l'hydrogène ou un groupe ($C_1$-$C_{12}$) alkyle ($C_3$-$C_8$)-cycloalkyle, ($C_3$-$C_6$)-alcényle, ($C_3$-$C_6$)-alcynyle, phényle, benzyle, benzoyle, phénoxysulfonyle ($C_1$-$C_{12}$)-alkylsulfonyle, ($C_3$-$C_6$)-alcénylsulfonyle ou phénylsulfonyle, groupes qui peuvent porter un halogène, un groupe $CF_3$, CN, ($C_1$-$C_4$)-alcoxy ou ($C_1$-$C_4$)-alcoxycarbonyle, et

$R_7$ et $R_8$ désignent chacun, indépendamment l'un de l'autre, un ($C_1$-$C_{12}$) alkyle ; ou bien forment ensemble un alkylène en $C_3$ à $C_8$,

ou un sel de ce composé.

2. Utilisation des composés de formule I selon la revendication 1 pour empêcher la croissance de plantes adventices ou pour diriger la croissance de plantes cultivées et pour accroître leurs teneurs en substances utiles.